# EUROPÄISCHE PATENTSCHRIFT

(11) **EP 1 733 217 B1**
(45) Veröffentlichungstag und Bekanntmachung des Hinweises auf die Patenterteilung: **20.02.2008**
(21) Anmeldenummer: 05716881.7
(22) Anmeldetag: 02.03.2005
(51) Int. Cl.: G01N 27/407

(54) **MESSFÜHLER ZUR BESTIMMUNG EINER PHYSIKALISCHEN EIGENSCHAFT EINES MESSGASSES**
PROBE FOR DETERMINING A PHYSICAL PROPERTY OF A TEST GAS
SONDE DESTINEE A DETERMINER UNE PROPRIETE PHYSIQUE D'UN GAZ DE MESURE

(30) Priorität: 20.03.2004 DE 102004013853
(43) Veröffentlichungstag der Anmeldung: 20.12.2006
(73) Patentinhaber: ROBERT BOSCH GMBH, 70442 Stuttgart (DE)
(72) Erfinder: WILDE, Juergen, 70736 Fellbach (DE)
(86) Internationale Anmeldenummer: PCT/EP2005/050920
(87) Internationale Veröffentlichungsnummer: WO 2005/090959

(56) Entgegenhaltungen:
- EP-A- 1 046 906
- EP-A- 1 215 385
- DE-A1- 19 924 319
- US-A1- 2002 195 339
- US-B1- 6 342 140

## Beschreibung

Die Erfindung geht aus von einem Messfühler zur Bestimmung einer physikalischen Eigenschaft eines Messgases, insbesondere des Drucks, der Temperatur oder der Konzentration einer Gaskomponente im Abgas von Brennkraftmaschinen, nach dem Oberbegriff des Anspruchs 1.

Bei einem bekannten Gasmessfühler zur Bestimmung der Konzentration einer Gaskomponente, insbesondere des Sauerstoffs, in Abgasen von Brennkraftmaschinen (DE 199 24 319 A1) besteht das als sog. Doppelschutzrohr ausgebildete Schutzrohr aus einem einen Messraum, in dem der gassensitive Sensorabschnitt liegt, umschließenden Innenrohr und einem dazu konzentrisch angeordneten Außenrohr, die zwischen sich einen Hohlraum einschließen und Gasdurchtrittsöffnungen für das Abgas aufweisen. Um zu verhindern, dass im Abgas verteilt mitgeführte oder durch Kondensation entstehende Wassertropfen sich auf dem heißen Sensorelement niederschlagen und dort Rissbildung auslösen, was zum Funktionsausfall des Sensorelements führt, sind an den Gasdurchtrittsöffnungen Strömungselemente angeordnet, die das Abgas in Richtung der inneren Mantelflächen von Innen- und Außenrohr umlenken und so die Wassertropfen an den inneren Mantelflächen binden. Infolge der ansteigenden Temperatur des Abgases verdampft das Wasser dann anschließend.

### Vorteile der Erfindung

Der erfindungsgemäße Messfühler mit den Merkmalen des Anspruchs 1 hat den Vorteil, dass durch die Spiralform des Schutzrohrs ebenso wie bei dem bekannten Messfühler der Zutritt von Wassertropfen und festen Substanzen zu dem Sensorelement, genauer zu dem vom Schutzrohr umschlossenen gassensitiven Sensorabschnitt des Sensorelements, zuverlässig verhindert wird, ohne dass ein fertigungstechnisch aufwendiges Doppelrohr erforderlich ist. Das spiralförmige Schutzrohr zwingt der Messgasströmung seinen spiralförmigen Verlauf auf, wobei durch die infolge der Strömungsumlenkung auf die Gasströmung wirkenden Zentrifugalkräfte, die Abscheidung des darin enthaltenen Wassers und der darin enthaltenen festen Substanzen an den Rohrwänden gefördert wird. Zudem findet durch den spiralförmigen Rohrwandverlauf des Schutzrohrs der Gasaustausch zwischen Abgasstrom und Sensorelement sehr viel schneller statt, da der nach innen hin kontinuierlich kleiner werdende Spiraldurchmesser die Gasströmung beschleunigt. Durch den schnelleren Gasaustausch besitzt der Messfühler eine größere Messdynamik und erfasst sehr viel schneller Änderungen im Messgas. Der Spiraldurchmesser und die Windungszahl sind die Abscheidung von Wasser und festen Substanzen beeinflussende Parameter, die sehr einfach optimiert werden können. Die kleinen leichteren Tropfen und Substanzen werden in den Bereich der kleineren Spiraldurchmesser abgeschieden, während die schweren Tropfen und Substanzen bereits im Bereich der größeren Spiraldurchmesser sich an der Rohrwand niederschlagen. Der innen, nahe dem Sensorelement liegende, den Messraum des Sensorelements begrenzende Rohrwandabschnitt des Schutzrohrs absorbiert die Wärmestrahlung des Sensorelements und erwärmt sich sehr viel schneller als die äußeren Spiralbereiche des Schutzrohrs. Die Taupunktüberschreitung wird damit auf die kühleren Außenbereiche des Schutzrohrs verschoben.

Durch die in den weiteren Ansprüchen aufgeführten Maßnahmen sind vorteilhafte Weiterbildungen und Verbesserungen des im Anspruch 1 angegebenen Messfühlers möglich.

Gemäß einer vorteilhaften Ausführungsform der Erfindung ist das Schutzrohr aus Blech hergestellt, das zumindest einseitig strukturiert oder beschichtet ist. Dadurch wird die Abscheidung von Wasser und Substanzen und der Abtransport durch Gewichtskraft und Druckgefälle zur axialen Austrittsöffnung des Schutzrohrs hin an der Innenwand des Schutzrohrs unterstützt. Anstelle einer Beschichtung des Blechs kann dieses auch mit einem Metallvlies oder einem Keramikgewebe belegt werden.

Gemäß einer vorteilhaften Ausführungsform der Erfindung besteht das Schutzrohr aus einer gesinterten Keramik, vorzugsweise aus einer Keramikfolie, die nach Formung gesintert wird

### Zeichnung

Die Erfindung ist anhand von in der Zeichnung dargestellten Ausführungsbeispielen in der nachfolgenden Beschreibung näher erläutert. Es zeigen:
- Fig. 1: ausschnittweise einen Längsschnitt eines Gasmessfühlers mit Schnittführung gemäß Linie I - I in Fig. 2,
- Fig. 2: einen Schnitt längs der Linie II - II in Fig. 1,
- Fig. 3: einen Zuschnitt für ein Schutzrohr des Messfühlers in Fig. 1 gemäß einem weiteren Ausführungsbeispiel,
- Fig. 4: eine perspektivische Darstellung eines aus dem Zuschnitt gemäß Fig. 1 geformten Schutzrohrs,
- Fig. 5: eine gleiche Darstellung wie in Fig. 2 eines modifizierten Schutzrohrs.

### Beschreibung der Ausführungsbeispiele

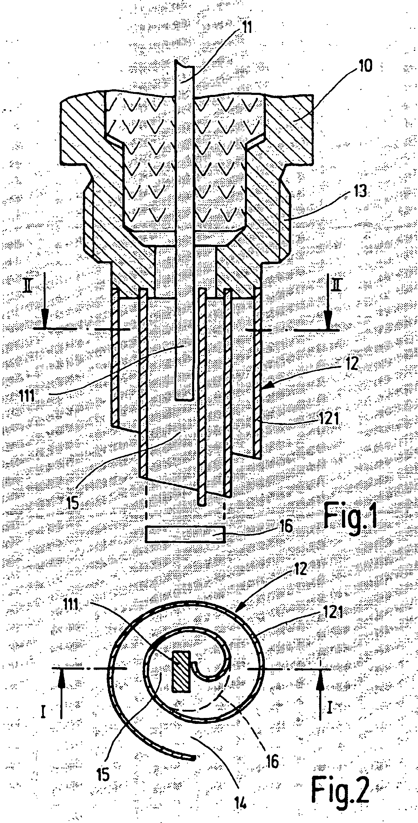

Der in Fig. 1 ausschnittweise im Längsschnitt dargestellte Messfühler zur Bestimmung einer physikalischen Eigenschaft eines Messgases ist beispielsweise als Lambdasonde zur Bestimmung der Sauerstoffkonzentration im Abgas von Brennkraftmaschinen konzipiert. Der Messfühler weist ein Fühlergehäuse 10 auf, in dem ein Sensorelement 11 aufgenommen ist, das mit einem gassensitiven Sensorabschnitt 111 axial aus dem Fühlergehäuse 10 vorsteht und dort von einem Schutzrohr 12 umgeben ist, das auf die Stirnseite des Fühlergehäuses 10 aufgesetzt und dort befestigt ist. Das Fühlergehäuse 10 ist mit einem Außengewinde 13 versehen, mit dem der Messfühler am Abgasrohr einer Brennkraftmaschine festgelegt ist, wobei das Schutzrohr 12 in das Innere des Abgasrohrs hineinragt und der gassensitive Sensorabschnitt 111 des Sensorelements 11 dem Abgas ausgesetzt ist.

Wie aus den Schnittdarstellungen in Fig. 1 und 2 zu erkennen ist, ist das Schutzrohr 12 spiralförmig ausgebildet, d.h. seine Rohrwand 121 zeigt einen spiralförmigen Verlauf, wobei der Spiraldurchmesser von einer axial sich erstreckenden Einlassöffnung 14 sich zunehmend nach innen verkleinert. Der innerste Spiralbereich, der von dem das Sensorelement 11 unmittelbar umgebenen Rohrwandabschnitt begrenzt ist, bildet einen Messraum 15 für das Sensorelement 11. Das Schutzrohr 12 ist am vom Fühlergehäuse 10 abgekehrten Ende stirnseitig offen, so dass das über die Einlassöffnung 14 eintretende Abgas, das innerhalb der Schutzrohrspirale zu einer spiralförmigen Strömung gezwungen wird und in den Messraum 15 eintritt, axial über das offene Ende des Messraums 15 ausströmen kann. Ebenso können die an der spiralförmig verlaufenden Rohrwand 121 sich niederschlagenden Wassertropfen und Substanzen, die durch Gewichtskraft und dem axialen Druckgefälle zum freien Ende des Schutzrohrs 12 gefördert werden, dort austreten. Für besondere Anwendungszwecke ist der den Messraum 15 umschließende Spiralbereich stirnseitig mit einem gasdurchlässigen Filter 16 verschließbar, wie dies in Fig. 1 angedeutet ist. Der Filter 16 besteht beispielsweise aus einem porösen Keramikgewebe oder einem Metall-Drahtvlies. Anstelle der Abdeckung mit einem Filter 16 kann das Schutzrohr 12 auch so ausgebildet sein, dass der Messraum 15 sich nach unten zum axialen Austrittsende stark verjüngt, was beispielsweise durch Zusammenquetschen des freien Endes des Schutzrohrs 12 erreicht werden kann.

Das Schutzrohr 12 ist vorzugsweise aus Blech hergestellt, wobei das Blech zumindest einseitig strukturiert, z.B. sandgestrahlt, oder mindestens einseitig beschichtet ist. Durch diese Strukturierung oder Beschichtung wird das Ausscheiden von im Abgas verteilt enthaltenen Wassertropfen und Substanzen oder Partikel an der spiralförmigen Rohrwand 121 wesentlich unterstützt. Als Beschichtung kann beispielsweise ein Keramikgewebe verwendet werden, das beispielhaft aus 96% Aluminiumoxid und 4% Siliziumoxid besteht. Alternativ besteht das Schutzrohr 12 aus einer gesinterten Keramik, wobei vorzugsweise das Schutzrohr 12 aus einer im Grünzustand sich befindlichen Keramikfolie geformt und anschließend gesintert wird. Des weiteren kann das Schutzrohr 12 aus Blech und aus einer gesinterten Keramik bestehen. Dabei wird entweder das Blech mit aufgelegter Keramikfolie zum Schutzrohr 12 geformt oder das Blech und die Keramikfolie jeweils separat zu einem Spiralrohr geformt und die beiden Spiralrohre anschließend axial ineinandergeschoben.

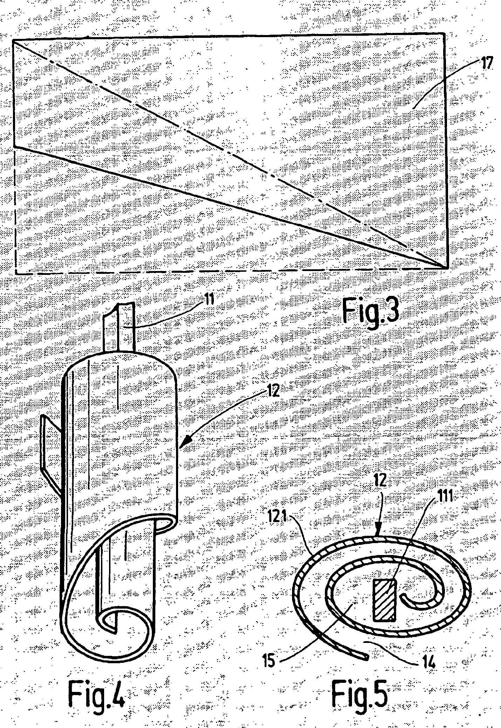

In bevorzugter Weise wird das Schutzrohr 12 aus einem ebenen Zuschnitt 17 aus Blech oder einer Keramikfolie geformt. Ein solcher Zuschnitt 17 ist beispielhaft in Fig. 3 dargestellt. Der Zuschnitt 17 ist hier ein Fünfeck. Zur Formung des Spiralrohrs wird der Zuschnitt 17 von seiner in Fig. 1 gesehen rechten Seite aus aufgerollt und im Aufrollzustand verfestigt, wodurch sich das in Fig. 4 perspektivisch dargestellte Schutzrohr 12 ergibt.

Der Zuschnitt 17 des Blechs oder der Folie zur Herstellung des Schutzrohrs 12 kann in weiteren verschiedenen geometrischen Formen ausgeführt werden, so dass sich entsprechend modifizierte geometrische Formen des Schutzrohrs 12 ergeben. So kann der Zuschnitt 17 auch rechteckig oder dreieckig ausgeführt werden, wie dies in Fig. 3 strichliniert bzw. strichpunktiert angedeutet ist. Auch kann die untere Längsseitenkante des Zuschnitts 17 einen bogen- oder kurvenförmigen Verlauf erhalten.

Ein solcher Zuschnitt 17 kann zu einem spiralförmigen Schutzrohr 12 geformt werden, bei dem - wie dies in Fig. 2 zu sehen ist - die Krümmung der Rohrwand etwa kreisförmig ist. Ist auch möglich von der Kreisform der Krümmung der Rohrwand abzuweichen und beispielsweise den Zuschnitt 17 so aufzuwickeln, dass die Rohrwandabschnitte ovale lichte Querschnitte einschließen, wie dies in Fig. 5 zu sehen ist. Bei einer solchen Ausbildung des Schutzrohrs 12 empfiehlt sich ein gerichteter Einbau des Messfühlers in den Gasstrom.

Das beschriebene spiralförmige Schutzrohr kann auch bei anderen Messfühlern, wie Temperaturmessfühler und Druckmessfühler für die Abgasmessung oder bei Messfühlern zur Messung der Konzentration von Stickoxiden im Abgas mit gleichen Vorteilen eingesetzt werden.

## Patentansprüche

1. Messfühler zur Bestimmung einer physikalischen Eigenschaft eines Messgases, insbesondere des Drucks, der Temperatur oder der Konzentration einer Gaskomponente im Abgas von Brennkraftmaschinen, mit einem Fühlergehäuse (10), einem darin gehalterten Sensorelement (11), das mit einem gassensitiven Sensorabschnitt (111) aus dem Fühlergehäuse (10) vorsteht, und mit einem den Sensorabschnitt (111) umgebenden, am Fühlergehäuse (10) festgelegten Schutzrohr (12), **dadurch gekennzeichnet, dass** das Schutzrohr (12) einen spiralförmigen Rohrwandverlauf aufweist.

2. Messfühler nach Anspruch 1, **dadurch gekennzeichnet, dass** das Schutzrohr (12) aus Blech hergestellt ist.

3. Messfühler nach Anspruch 2, **dadurch gekennzeichnet, dass** das Blech zumindest einseitig strukturiert, vorzugsweise sandgestrahlt, ist.

4. Messfühler nach Anspruch 2, **dadurch gekennzeichnet, dass** das Blech mindestens einseitig beschichtet ist.

5. Messfühler nach Anspruch 1, **dadurch gekennzeichnet, dass** das Schutzrohr (12) aus einer gesinterten Keramik besteht.

6. Messfühler nach Anspruch 1, **dadurch gekennzeichnet, dass** das Schutzrohr (12) aus Blech und einer aufgelegten, gesinterten Keramikfolie besteht.

7. Messfühler nach Anspruch 6, **dadurch gekennzeichnet, dass** das Blech und die Keramikfolie gemeinsam zum Schutzrohr geformt sind.

8. Messfühler nach Anspruch 6, **dadurch gekennzeichnet, dass** das Blech und die Keramikfolie jeweils für sich zu einem Spiralrohr geformt und die beiden Spiralrohre axial ineinandergeschoben sind.

9. Messfühler nach einem der Ansprüche 2 - 8, **dadurch gekennzeichnet, dass** das Schutzrohr (12) aus einem ebenen Blech- oder Folienzuschnitt (17) geformt ist.

10. Messfühler nach Anspruch 9, **dadurch gekennzeichnet, dass** der Zuschnitt (17) ein Rechteck, ein Dreieck oder ein Fünfeck ist.

11. Messfühler nach einem der Ansprüche 1 - 10, **dadurch gekennzeichnet, dass** das Schutzrohr (12) zumindest im innersten Spiralbereich, der von dem das Sensorelement (11) unmittelbar umgebenden Rohrwandabschnitt begrenzt ist, stirnseitig mit einem gasdurchlässigen Filter (16) abgedeckt ist.

12. Messfühler nach einem der Ansprüche 1 - 10, **dadurch gekennzeichnet, dass** das Schutzrohr (12) zumindest im innersten Spiralbereich, der von dem das Sensorelement (11) unmittelbar umgebenden Rohrwandabschnitt begrenzt ist, zu seiner stirnseitigen Öffnung hin verjüngt ist.

## Claims

1. Measurement sensor for determination of a physical characteristic of a measurement gas, in particular the pressure, the temperature or the concentration of a gas component in the exhaust gas of internal combustion engines, having a sensor housing (10), a sensor element (11) which is held therein and has a gas-sensitive sensor section (111) which projects out of the sensor housing (10), and having a protective tube (12) which surrounds the sensor section (111) and is fixed to the sensor housing (10), **characterized in that** the protective tube (12) has a spiral tubular wall profile.

2. Measurement sensor according to Claim 1, **characterized in that** the protective tube (12) is produced from sheet metal.

3. Measurement sensor according to Claim 2, **characterized in that** the metal sheet is structured on at least one side, preferably by sandblasting.

4. Measurement sensor according to Claim 2, **characterized in that** the metal sheet is coated on at least one side.

5. Measurement sensor according to Claim 1, **characterized in that** the protective tube (12) is composed of a sintered ceramic.

6. Measurement sensor according to Claim 1, **characterized in that** the protective tube (12) is composed of sheet metal and a sintered ceramic film placed on it.

7. Measurement sensor according to Claim 6, **characterized in that** the metal sheet and the ceramic film are shaped jointly to form the protective tube.

8. Measurement sensor according to Claim 6, **characterized in that** the metal sheet and the ceramic film are each in their own right shaped to form a spiral tube, and the two spiral tubes are pushed axially one inside the other.

9. Measurement sensor according to one of Claims 2 to 8, **characterized in that** the protective tube (12) is formed from a flat sheet-metal or foil blank (17).

10. Measurement sensor according to Claim 9, **characterized in that** the blank (17) is a rectangle, a triangle or a pentagon.

11. Measurement sensor according to one of Claims 1 to 10, **characterized in that** the protective tube (12) is covered at the end by a gas-permeable filter (16) at least in the innermost spiral area which is bounded by the tubular wall section which directly surrounds the sensor element (11).

12. Measurement sensor according to one of Claims 1 to 10, **characterized in that** the protective tube (12) is tapered towards its end opening at least in the innermost spiral area which is bounded by the tubular wall section which directly surrounds the sensor element (11).

## Revendications

1. Sonde de mesure destinée à déterminer une propriété physique d'un gaz de mesure, en particulier la pression, la température ou la concentration d'un composant gazeux dans les gaz d'échappement de moteurs à combustion interne, comprenant un boîtier de sonde (10), un élément de détection (11) contenu dans celui-ci, et dont un segment de détection sensible au gaz (111) dépasse du boîtier de sonde (10), , et un tube de protection (12) entourant le segment de détection (111) et fixé au boîtier de sonde (10),
**caractérisée en ce que**
le tube de protection (12) présente un tracé de paroi de tube en forme de spirale.

2. Sonde de mesure selon la revendication 1,
**caractérisée en ce que**
le tube de protection (12) est fabriqué en tôle.

3. Sonde de mesure selon la revendication 2,
**caractérisée en ce que**
la tôle est structurée en une seule pièce, de préférence sablée.

4. Sonde de mesure selon la revendication 2,
**caractérisée en ce que**
la tôle est revêtue au moins sur un côté.

5. Sonde de mesure selon la revendication 1,
**caractérisée en ce que**
le tube de protection (12) est en une céramique frittée.

6. Sonde de mesure selon la revendication 1,
**caractérisée en ce que**
le tube de protection (12) est en tôle revêtue d'une feuille de céramique frittée.

7. Sonde de mesure selon la revendication 6,
**caractérisée en ce que**
la tôle et la feuille de céramique sont formées conjointement pour former le tube de protection.

8. Sonde de mesure selon la revendication 6,
**caractérisée en ce que**
la tôle et la feuille de protection sont formées chacune séparément pour former un tube en spirale, et les deux tubes en spirale sont insérés axialement l'un dans l'autre.

9. Sonde de mesure selon l'une des revendications 2 à 8,
**caractérisée en ce que**
le tube de protection (12) est formé d'une découpe de tôle ou de feuille (17).

10. Sonde de mesure selon la revendication 9,
**caractérisée en ce que**
la découpe (17) est un rectangle, un triangle ou un pentagone.

11. Sonde de mesure selon l'une des revendications 1 à 10,
**caractérisée en ce que**
le tube de protection (12), au moins dans la zone en spirale intérieure, délimitée par la partie de paroi de tube entourant directement l'élément de détection (11), est recouverte du côté frontal d'un filtre (16) perméable aux gaz.

12. Sonde de mesure selon l'une des revendications 1 à 10,
**caractérisée en ce que**
le tube de protection (12), au moins dans la zone en spirale intérieure, délimitée par la partie de paroi de tube entourant directement l'élément de détection (11), se rétrécit vers son ouverture frontale.
